# EUROPÄISCHE PATENTSCHRIFT

(11) **EP 2 782 743 B1**
(45) Veröffentlichungstag und Bekanntmachung des Hinweises auf die Patenterteilung: **31.10.2018**
(21) Anmeldenummer: 12809093.3
(22) Anmeldetag: 22.11.2012
(51) Int. Cl.: B29C 67/00

(54) **SYSTEM ZUM HERSTELLEN DREIDIMENSIONALER MODELLE**
SYSTEM FOR PRODUCING THREE-DIMENSIONAL MODELS
SYSTÈME DE FABRICATION DE MODÈLES TRIDIMENSIONNELS

(30) Priorität: 26.11.2011 DE 102011119338
(43) Veröffentlichungstag der Anmeldung: 01.10.2014
(73) Patentinhaber: Voxeljet AG, 86316 Friedberg (DE)
(72) Erfinder: EDERER, Ingo, 82269 Geltendorf (DE); HARTMANN, Andreas Dominik, 86391 Stadtbergen (DE); GÜNTHER, Daniel, 80637 München (DE)
(74) Vertreter: Helbig, Christian
(86) Internationale Anmeldenummer: PCT/DE2012/001114
(87) Internationale Veröffentlichungsnummer: WO 2013/075696

(56) Entgegenhaltungen:
- EP-A1- 1 037 739
- DE-A1-102007 050 953

## Beschreibung

Die vorliegende Erfindung bezieht sich auf ein System nach Anspruch 1 zum Herstellen dreidimensionaler Modelle mittels Schichtauftragstechnik.

Bei Schichtbauverfahren zur Erzeugung dreidimensionaler Gegenstände nach Computerdaten werden üblicherweise Verfahren verwendet, bei denen eine zumindest in vertikaler Richtung verschiebliche Plattform (=Bauplattform), die gegebenenfalls von einem Behälter umfasst ist und damit einen Behälter bildet, zu Beginn des Prozesses in eine oberste Stellung gebracht wird. Daran anschließend wird auf diese Plattform ein Baumaterial, beispielsweise beim 3D-Drucken oder beim Lasersintern ein partikulärer, pulverförmiger Stoff vollflächig und dünnschichtig aufgebracht. In einem weiteren Schritt wird der Stoff mittels eines physikalischen oder chemischen Verfestigungsmechanismus selektiv, entsprechend der erwünschten Bauteilform, gebunden. Dieser Bindungsschritt kann beispielsweise unter Verwendung von Klebstoffen erfolgen, die über Ink-Jet-Techniken aufgedruckt werden können. Anschließend wird die Plattform um eine Schichtstärke abgesenkt und eine neue Schicht Partikelmaterial aufgetragen.

Diese Schritte werden solange wiederholt, bis der gewünschte Körper aufgebaut wurde, also alle notwendigen Schichten aufgetragen und verfestigt wurden. Der Behälter füllt sich während dieser Schritte sukzessive mit Pulvermaterial, wobei Teile davon zum gewünschten Baukörper verbunden wurden, jedoch der Rest lose bleibt und während des Bauvorgangs als Stützmedium für überhängende Teile, des zu bauenden Objektes dient.

Nach Beendigung des Schichtaufbaus kann, gegebenenfalls nach einer Wartezeit, das lose Partikelmaterial abgesaugt oder auf sonstige Weise entfernt werden und das gewünschte Objekt entnommen werden.

Bei dem Prozess des Schichtaufbaus gilt ein besonderes Augenmerk der vertikalen Bewegung der Bauplattform, in der die Schichten aufgebaut werden (Z-Richtung). Diese erfolgt in sehr kleinen Schritten, typischerweise in der Größenordnung 20 µm - 500 µm. Die exakte Einhaltung der Schrittweite ist für die Verfestigungsmechanismen entscheidend, da das Verbinden des Partikelmaterials nicht nur in der horizontalen Ebene, sondern auch in der vertikalen Richtung sicher gestellt werden muss. Fällt die Schichtstufung aufgrund einer fehlerhaften Bewegung der Plattform in Z-Richtung beispielsweise größer aus, kann dies zur Folge haben, dass die aktuelle Schicht nicht mehr mit der darunterliegenden verbunden werden kann und eine sogenannte Delamination ist die Folge. Dies führt dann dazu, dass das Bauteil fehlerhaft ist und daher nicht verwendet werden kann.

Die Z-Bewegung der Bauplattform beeinflusst darüberhinaus auch die Genauigkeit des Bauteils. Die Gesamtabweichung der Ist- von der Soll-Bewegung über den Verfahrweg der Bauplattform geht linear in die Bauteiltoleranz ein. Eine Ungenauigkeit hier kann auch wieder dazu führen, dass ein Bauteil unbrauchbar wird.

Auch jede andere Abweichung der Ist- von der Soll-Bewegung der Bauplattform in den horizontalen Richtungen (X und Y) ist in Form von Fehlern im Bauteil sichtbar. Zu diesen Abweichungen gehören unter anderem Verwindungen der Bauplattform. Solche Verwindungen können beispielsweise durch senkrecht auf die Bauplattform wirkende Dichtungskräfte und zunehmendes Gewicht des aufgetragenen Materials hervorgerufen werden. Zudem kann auch vertikales oder horizontales Spiel in der Haltevorrichtung der Bauplattform zu Fehlern im Bauprozess führen.

Um die Produktivität einer Schichtbauanlage zu erhöhen kann die Bauplattform nach Fertigstellung eines Bauprozesses entnommen und durch eine leere Bauplattform ersetzt werden.

Für einen Wechsel der Bauplattform muss eine lösbare Kopplung, Anbindung oder sonstige Verbindung zwischen der Verfahreinheit der Bauplattform in Schichtrichtung (Z-Achse) und der Produktionsanlage vorgesehen sein.

Bei pulverbasierten Bauprozessen bewegt sich die Bauplattform in Schichtrichtung (Z-Richtung) innerhalb einer geschlossenen Umrahmung, die das Auslaufen des Pulvers verhindert. Zusammen mit der Bauplattform werden diese als Baubehälter bezeichnet. Baubehälter die der Produktionsanlage entnommen werden können werden als Wechselbehälter oder Jobboxen bezeichnet.

Solche Wechselbehälter sind beispielsweise in der EP 1 322 458 beschrieben und dienen der einfacheren Handhabung und ebenso zur Vereinfachung des Prozesses, des Einführens und Herausführens der Bauplattform in einen Baubereich einer Bauvorrichtung.

Neben dieser Anforderung einer hochgenauen Z-Positionierung der Bauplattform fordert ein wirtschaftlicher Prozess ebenso einen schnellen und zuverlässigen Wechsel des gesamten Wechselbehälters (Jobbox).

Wie bereits beschrieben, ist es die Aufgabe der Z-Achse, die Bauplattform in Z-Richtung relativ zu den schichtgenerierenden Werkzeugen und relativ zur Jobboxwandung zu positionieren. Im Prozess senkt die Z-Achse die Bauplattform von oben nach unten jeweils um eine Schichtdicke ab. Da die Schichten sehr dünn, z.B. 20µm dick sind, muss die Z-Achse sehr exakt positionieren.

Ein horizontaler Versatz einzelner Schichten zueinander wird direkt auf dem Bauteil abgebildet und ist deshalb unbedingt zu verhindern. Um einen horizontalen Versatz der einzelnen Schichten zu verhindern muss die Z-Achse spielfrei geführt werden.

Während des gesamten Bauprozesses steht der zunehmende Pulverkuchen mit der Umrahmung der Jobbox in Berührung. Selbst eine sehr kleine Ortsveränderung dieser Wandung könnte zum Schichtversatz und damit zur Zerstörung der Bauteile führen. Es ist deshalb Notwendig die Wandung steif und mit ausreichender Ebenheit auszuführen. In der Anlage muss die Umrahmung (Jobboxwandung) der Jobbox während des Bauprozesses spielfrei fixiert sein.

Die Hauptanforderung an eine solche Verbindung zwischen Maschine und der Jobbox ist zunächst eine hochfeste Anbindung zwischen Z-Achse und Bauplattform.

Ist die Bauplattform gegenüber der Wandung abgedichtet, muss dabei die Bauplattform gegenüber einer Umrahmung (Jobboxwandung) unbedingt in einer bestimmten Lage sein.

Die Gestaltung der Kopplung zwischen Z-Achse und Bauplattform bestimmt neben Prozesssicherheit und Bauteilgenauigkeit auch das Maschinenhandling und die vertikalen Abmessungen der Schichtbauanlage (Produktionsanlage). Nach Ende eines Bauprozesses darf beim Entpannen einer ausgerichteten, bebauten Bauplattform dieser auf keinen Fall in vertikaler Richtung bewegt werden. Jeder Ruck in vertikaler Richtung könnte Bauteile verschieben und damit auch zerstören.

In Systemen nach Stand der Technik werden zum Fixieren der Bauplattform beispielsweise Nullpunktspannsysteme ähnlich derer in Palettieranlagen verwendet. Dabei wird ein runder Spannzapfen mit bestimmter Geometrie von radial angeordneten Spannelementen umgriffen und zentrisch in Zapfenrichtung auf eine Auflagefläche gespannt.

Weiter existieren Spannzangensysteme, bei denen eine vertikal angeordnete, radial geschlitzte Hülse mit einer Bohrung definierter Größe einen Zylinder greift.

Da die Jobbox beziehungsweise der Wechselbehälter oder gegebenenfalls auch die Plattform selbst vorzugsweise der Maschine horizontal über ein Schienensystem zugeführt werden können, erweisen sich solche Systeme als problematisch, da sie rundum geschlossen sind und Spannzapfen und Spannsystem bzw. Zylinder und Spannzange beim Einfahren der Jobbox kollidieren könnten

Bei Vorrichtungen, mit solch einem Spannsystem, muss bei der Beladung mit einer Jobbox, die Z-Achse samt dem Spannsystem aus dem Bewegungsbereich der Jobbox gefahren werden. Anschließend muss der Spanner in geöffneter Lage exakt auf Position fahren und den Spannzapfen greifen. Das erfordert enormen steuerungstechnischen Aufwand und bedarf einer zuverlässigen Sensorik.

Gleichzeitig setzen diese Systeme voraus, dass der Spannzapfen und damit die Bauplattform und ferner die gesamte Jobbox zentrisch zum Spannsystem ausgerichtet ist. Dabei muss davon ausgegangen werden, dass dies selten der Fall ist, da die Bauplattform üblicherweise in der Jobbox nur von einer elastischen Dichtung geführt wird. Die Dichtung kann dabei dazu neigen, dass sich die Bauplattform etwas verkeilt und somit nicht vollständig im Wechselbehälter ausgerichtet ist.

Da zudem die eingesetzten Jobboxen tendenziell immer größer werden, ist die Auflagefläche der beschriebenen Nullpunkt-Spannsysteme, wenn sie einzeln verwendet werden, zu klein. Die Verwendung mehrerer Spanner dieser Art ist jedoch aufwendig und fehleranfällig und teuer.

Vorrichtungen, die eine große Auflagefläche und Haltekraft benötigen können auch mit Magnet- und Vakuumplatten realisiert werden. Diese Systeme erfordern aber eine äußerst präzise Positionierung der Bauplattform in Z-Richtung. Weiter sind sie sehr empfindlich gegenüber Verschmutzung. Gerade bei einem dreidimensionalen Druckverfahren mit Partikel- beziehungsweise Pulvermaterial ist eine solche Verschmutzung durch herabfallendes Pulver beim Jobboxwechsel nicht zu vermeiden.

Neben der Fixierung der Bauplattform nach dem Einführen in eine Vorrichtung zum schichtweisen Aufbau von Modellen ist es häufig auch vorteilhaft, wenn die Wandung um die Bauplattform, die mit der Bauplattform zusammen einen sogenannten Wechselbehälter (Jobbox) bildet, in der Aufbauvorrichtung nach dem Einführen fixiert wird.

Bei einem Bauprozess ist es nämlich wichtig, dass die Jobbox in allen Richtungen spielfrei gehalten wird und dennoch ein Wechseln der Jobbox leicht möglich ist.

Darüber hinaus ist es auch wichtig, dass die Wechselbehälter sowie deren Anbindungen nicht empfindlich auf Schmutz reagieren, da häufig abrasives Partikelmaterial zum Einsatz kommt.

Weiterhin ist der Kostenfaktor immer ein wichtiger Punkt. Die Fixierung der Jobbox beziehungsweise der Wechselbehälters oder auch nur deren Wandung soll bewegungsneutral stattfinden können, damit sie sich beim Schließen nicht verschieben.

Ein weiterer Punkt ist auch die Sicherheit der Betreiber. So ist es beispielsweise wichtig, dass diese nicht der Gefahr ausgesetzt sind, sich die Finger einzuquetschen.

Aus der DE 199 39 616 C5 ist eine Möglichkeit der Ankopplung der Jobbox in einer Vorrichtung beschrieben, die auch dafür geeignet ist, wenn die Jobbox über ein Schienensystem zugeführt wird. Hier wird der gesamte Wechselbehälter angehoben und dabei gegen eine Zentrierung gedrückt. Ein weiteres zwangsgesteuertes Hebelsystem bzw. Federsystem greift und fixiert anschließend die Bauplattform.

Ein solcher Anbindungsmechanismus hat sich als relativ aufwendig und kostenintensiv erwiesen, da wieder eine hohe Positioniergenauigkeit erforderlich ist. Weiterhin können die dort verwendeten Federn zu einem verspannten Anheben führen. Darüber hinaus besteht eine solche Konstruktion aus einem komplizierten Hebelsystem, das eine hohe Fertigungsgenauigkeit erfordert.

Beispielhaft sollen auch die DE 10 2009 015 130 A1 und WO00211067352A2 erwähnt werden in denen Wechselbehälter mit einer im Wechselbehälter integrierten Z-Achse beschrieben werden. Bei diesen Lösungen sind Z-Achse und Bauplattform fest miteinander verbunden. Somit kann auf ein lösbares Spannsystem zwischen Bauplattform und Z-Achse verzichtet werden. Es bedarf hier nur eines Spannsystems für den ganzen Wechselbehälter innerhalb der Schichtbauanlage.

Als Nachteil ergibt sich die Tatsache, dass jeder Wechselbehälter mit einer Z-Achse ausgestattet werden muss. Da die Z-Achse einen erheblichen Anteil der Anlagenkosten ausmacht, ist diese Lösung nur bei einem Einsatz von wenigen Wechselbehältern pro Anlage sinnvoll.

EP 1 037 739 A1 offenbart einen Wechselbehälter, wobei die Werkstückplattform an ihrer Unterseite eine Halterung zum in Eingriff bringen mit einer Kopplungsvorrichtung eines Tragarms aufweist.

Ausgehend hiervon ist es Aufgabe der vorliegenden Erfindung ein System der eingangs beschriebenen Art bereitzustellen, mit dem es möglich ist, die Bauplattform schnell und zuverlässig in der zu wechseln. Dabei soll die Bauplattform nach Einführen in möglichst alle Richtungen ausgerichtet werden können.

Die Aufgabe der vorliegenden Erfindung wird durch ein System nach Anspruch 1 gelöst.

Gemäß der vorliegenden Erfindung wird nun ein System zum Herstellen dreidimensionaler Modelle mittels Schichtauftragstechnik von fluidem Baumaterial auf eine Bauplattform beschrieben. Es sind hierbei alle bekannten dreidimensionalen Schichtbauprozesse denkbar. Insbesondere bei der Verwendung von Pulvermaterial bei einem Schichtbauverfahren werden häufig sogenannte Wechselbehälter oder Jobboxen verwendet. Diese sind häufig derart vorgesehen, dass die Bauplattform zumindest einen Teil des Bodens des Wechselbehälters bildet. Zum Verfahren der Bauplattform in dem Wechselbehälter bei einem Bauprozess in Z-Richtung könnten zwar an der Wandung des Wechselbehälters Führungen vorgesehen sein, vorzugsweise wird aber bei der vorliegenden Erfindung ein Wechselbehälter verwendet, bei dem die Bauplattform im Wechselbehälter in Z-Richtung nicht geführt ist. Das System weist gemäß der vorliegenden Erfindung im wesentlichen horizontale Zu- und Abführbereiche, wie beispielsweise Bahnen zum Zu- und Abführen der Bauplattform in eine Bauvorrichtung auf.

Im zugeführten Zustand soll sich die Bauplattform im Wesentlichen in einem Baubereich der Bauvorrichtung befinden und dort im Eingriff mit der Bauvorrichtung stehen, um den Bauprozess durchführen zu können. Gemäß der vorliegenden Erfindung ist dabei unterhalb der Bauplattform bauvorrichtungsseitig eine Klemmbackenspannvorrichtung vorgesehen, die mit einem Teilabschnitt der Bauplattform in Eingriff gebracht werden kann.

Ein Spannen der Bauplattform mit horizontal zustellbaren Klemmbacken, hat sich bisher als geeignete Methode erwiesen, da diese über eine große Fläche und von einer vertikalen Bewegung entkoppelt sind.

Eine Klemmbackenspannvorrichtung kann dabei beispielsweise einen Eingriff durch Umgreifen eines zu fixierenden Elementes bereitstellen oder auch durch spreizen der beiden Klemmbacken. Die Klemmbackenspannvorrichtung kann dabei ein oder mehrere, vorzugsweise zwei Klemmbackenpaare aufweisen.

Bei handelsüblichen Zweibackenklemmsystemen haben sich die aufwendige Betätigung und die Baugröße als nachteilig erwiesen, da die Backen über Spindeltriebe, Hydraulikzylinder oder auch über Kniehebel gespannt werden müssen.

Dadurch, dass nur ein Teilabschnitt der Bauplattform mit einer Klemmbackenspannvorrichtung in Eingriff gebracht werden muss, sind keine extrem großen und schweren Klemmbackenvorrichtungen vorzusehen.

Da die Bauplattform in der Wandung oft höhenverstellbar angeordnet ist, kann es sein, dass zwischen der Bauplattform und der Wandung eine Dichtung vorgesehen ist, die manchmal dazu neigen kann, dass sich die Bauplattform etwas verkeilt und somit nicht vollständig im Wechselbehälter ausgerichtet ist.

Hierbei hat es sich als vorteilhaft gezeigt, dass die Klemmbacken auch zum zentrieren der Bauplattform in der Bauvorrichtung geeignet sind. Ist die Bauplattform beispielsweise zu einem geringen Teil in dem Wechselbehälter verwunden oder wird der gesamte Wechselbehälter nicht exakt genau in die Vorrichtung eingeführt, dann dient die Klemmbackenvorrichtung beim Spannen der Bauplattform in der Bauvorrichtung auch zur Ausrichtung beziehungsweise zum Zentrieren der Bauplattform.

Mit dem System nach der vorliegenden Erfindung kann die Bauplattform ohne weitere Positionierfahrten angekoppelt werden, und funktioniert auch bei starker Verschmutzung zuverlässig.

Es wird ein sicherer und schneller Wechsel in die Schichtbauanlagen möglich.

Die Bauplattform weist an dem von den Klemmbacken anzugreifenden Bereich eine den Klemmbacken entsprechende Geometrie auf, damit beim Klemmen eine noch einfachere und eventuell exaktere Fixierung möglich ist.

Gemäß einer bevorzugten Ausführungsform der vorliegenden Erfindung wird hierzu vorgeschlagen, dass die Jobbox, beziehungsweise deren Wandung über ein Schienensystem der Anlage zugeführt wird und somit schon in zwei Richtungen, vertikal und quer zur Einschubrichtung lagedefiniert führt und gegebenenfalls gesichert ist.

Dabei könnte es sein, dass zumindest eine Wechselbehälterseitenwandung Schienen oder die Bauvorrichtung Schienen aufweist.

Das Schienensystem kann dabei vorzugsweise aus einer Kombination von profilierten Schienen und Rollenbahnen mit formschlüssigen Rollen vorgesehen sein. Die Rollen sind in der Schiene vertikal so versetzt, dass die Box vertikal und quer zur Einschubrichtung spielfrei fixiert ist. Es ist dabei denkbar, dass die Profilschienen fest an der Maschine angebunden sind und die Rollenbahn an der Jobbox oder umgekehrt. Weiterhin wäre es auch denkbar, dass gleitende Profilschienenführungen wie z.B. Schwalbenschwanzführungen eingesetzt werden.

Das Zu- und Abführen der Wechselbehälter in eine Bauvorrichtung erfolgt vorzugsweise entlang Schienen und Rollenbahnen, wobei es sein könnte, dass zumindest eine Wechselbehälterseitenwandung, vorzugsweise zwei Wechselbehälterseitenwandungen Schienen aufweisen und die Bauvorrichtung zumindest eine entsprechende Rollenbahn. Unter Seitenwandungen soll hier eine Wandung seitlich zur Einschubrichtung des Wechselbehälters in die Bauvorrichtung zu verstehen sein.

Daneben könnte die Anordnung aber auch genau andersherum sein, dass zumindest eine Wechselbehälterseitenwandung (vorzugsweise beide) Rollenbahnen und die Bauvorrichtung entsprechende Schienen aufweist.

Mit solchen Schienen-/Rollenführungen für die Wechselbehälter ist schon seitlich zur Einschubrichtung eine genaue Führung der Bauplattform, beziehungsweise des Wechselbehälters gewährleistet. Vorzugsweise ist das oder die Klemmbackenpaare derart ausgestaltet, dass die Bauplattform beim Einführen in die Bauvorrichtung vorzentriert wird

Eine Vorrichtung nach der hier beschriebenen Erfindung bezieht sich insbesondere auf eine Vorrichtung in einem Verfahren zum Herstellen dreidimensionaler Modelle mittels Schichtauftragstechnik, bei dem fluides Baumaterial auf ein Baufeld aufgetragen wird und dabei die Bauplattform des Wechselbehälters von mindestens einem Greifer mit einer Schließkeilmechanik gehalten und zentriert wird.

Der Schließmechanismus setzt sich dabei vorzugsweise aus zwei parallel verfahrenden Backen zusammen, die den Boden, also die Bauplattform, beim Einschub des Wechselbehälters zentrieren und kraftschlüssig und gemäß einer weiteren bevorzugten Ausführungsform auch formschlüssig spannen.

Die Backen werden beispielsweise durch senkrecht verfahrende Keile aufeinander zugestellt, die auf einem Zylinder oder einem anderen Verbindungsabschnitt gleiten.

Die Winkelgestaltung der Keile wird dabei vorzugsweise so gewählt, dass die Vertikalkraft eines zweistelligen Aktors vervielfacht wird und in Halteposition eine Selbsthemmung auftritt.

Die Erfindung des vorliegenden Keilverschlusses, vermag es mit einem standardisierten, zweistelligen Aktor , wie z.B. einem Pneumatikzylinder die Bauplattform, beziehungsweise den Jobboxboden steif, zentrisch und mit einer definierten Kraft zu spannen und zu halten.

Der Aufbau kann dabei bei höchster Haltekraft äußerst kompakt ausgeführt werden. Der Aktor fährt exakt zwei Positionen an, die eindeutig mit Sensoren abgefragt werden können.

Gemäß einer bevorzugten Ausführungsform der Erfindung können die Klemmbacken von unten in die Bauplattform, beispielsweise eine entsprechende Aussparung der Bauplattform eingreifen.

Hierbei würden die Klemmbacken sich beim Fixieren der Bauplattform auseinanderbewegen.

Daneben ist es aber auch denkbar, dass die Klemmbacken einen unterhalb der Bauplattform vorgesehenen Abschnitt umgreifen.

Hierbei würden sich die Klemmbacken beim Fixieren der Bauplattform aufeinander zu bewegen.

Gute Ergebnisse konnten erreicht werden, wenn mindestens zwei Klemmbackenpaare vorgesehen sind.

Nach dem Bauprozess muss das ungebundene Pulver vom verfestigten Material des Bauteiles entfernt werden. Hierzu werden die Wechselbehälter beispielsweise in ein Peripheriegerät eingeführt. Dort wird die Bauplattform wieder von einer Hubeinrichtung angehoben und die Bauteile können schrittweise vom Partikelmaterial befreit und entnommen werden.

Da die Hubeinrichtung in diesen Geräten keine allzu genaue Positioniergenauigkeit erfordert, muss auch der Boden nicht spielfrei verspannt werden. Es genügt ein starres Bauteil mit passender Geometrie und geringem Spiel zum Prismenblock der Bauplattform. Dies spart enorm Kosten durch Einsparung von Bauteilen und Ansteuerung und Sensorik.

Gemäß einer besonders bevorzugten Ausführungsform ist bei einem erfindungsgemäßen System ferner der Wechselbehälter in einer Einschubrichtung in der Bauvorrichtung fixiert.

Vorzugsweise wird daher noch eine Verriegelung vorgeschlagen, mit der die Jobbox in Einschubrichtung fixiert wird.

Vorzugsweise ist hierzu eine Fixierung an einer in Einschubrichtung gesehen vorderen Wechselbehälterwandung derart vorgesehen, dass in der vorderen Wechselbehälterwandung eine Öffnung vorgesehen ist, in die ein an der Bauvorrichtung vorgesehener Aktor eingreift und in der Öffnung verspreizt. Ein derartiger verspreizbarer Aktor könnte beispielsweise ein elastisches Formteil, Keile, Keilsystem und/oder Spreizsysteme aufweisen.

Gemäß einer bevorzugten Ausführungsform wird zur Fixierung ähnlich einem Flaschenverschluss eine runde Hülse aus flexiblen Material in eine Oeffnung der Wandung des Wechselbehälters eingeführt und axial so zusammengedrückt, dass sie sich im Durchmesser weitet, damit eine kraftschlüssige Fixierung der Jobbox in Einschubrichtung über ein anschwellendes Formteil mit richtungsneutraler Schließbewegung erreicht wird.

Das flexible Formteil kann dabei beispielsweise rund sein oder sich aus mehreren radial angeordneten flexiblen Formteilen zusammensetzen.

Diese Klemmvorrichtung ist dabei vorzugsweise fest mit der Anlage verbunden. Das Gegenstück dazu ist eine Bohrung an der Rückseite der Jobbox. Wird die Jobbox in die Anlage eingeführt, schiebt sich die Bohrung zentrisch über die Klemmvorrichtung. Beim Verriegeln spreizt sich die Hülse in die Bohrung und fixiert so die Jobbox in Einschubrichtung.

Handelt es sich in der Jobbox um eine zylindrische Bohrung erfolgt die Fixierung kraftschlüssig. Hat die Bohrung im Gegenstück die Form des gekrümmten Formteils erfolgt die Fixierung formschlüssig.

Zur Verriegelung genügt dabei ein Linearaktor wie z.B. ein mit Druckluft beaufschlagter Pneumatikzylinder oder ein Elektrozylinder. Es ist aber auch möglich die Verriegelung über Gewindetriebe, Seilzugsysteme oder Hebelsysteme zu verschließen.

Das Formteil kann daher beispielsweise durch axiales Zusammenschieben anschwellen z.B. mit pneumatischen, hydraulischen oder elektrischen Linearaktoren, oder durch Gewindetriebe, Hebelsysteme bzw. keilgebundene Spreizmechanismen aufgeweitet werden. Ebenso wäre es auch möglich, dass das Anschwellen des Formteils durch direkte Druckbeaufschlagung mit Fluiden erfolgt.

Anstatt einer flexiblen Hülse können auch konische Spreizsysteme oder Keilsysteme ähnlich wie Bohrspannfutter zum Einsatz kommen. Darüberhinaus besteht auch die Möglichkeit flexible Formteile selbst mit Druck zu beaufschlagen (z.B. pneumatisch oder hydraulisch).

Eine solche Verriegelung der Jobbox beziehungsweise der Wandung ist dicht und damit geschützt vor Verschmutzungen. Die Bohrung im Gegenstück kann durchgängig sein, so dass Verschmutzungen durchgeschoben werden können. Weiterhin ist der Schließmechanismus rundum abgeschlossen, der Quetschweg ist direkt und kurz, so dass keine Quetschgefahr für den Betreiber besteht.

Die Schließbewegung an sich ist in alle Richtungen neutral, so dass die Jobbox durch die Verriegelung nicht verschoben wird.

Zur näheren Erläuterung wird die bevorzugte Ausführung der Erfindung anhand bevorzugter Ausführungsbeispiele in den folgenden Zeichnungen dargestellt.

Dabei zeigen:
- Figur 1a: eine Darstellung einer bevorzugten Ausführung eines Klemmsystems in Draufsicht;
- Figur 1b: einen Schnitt durch das Klemmsystem aus Figur 1a in geöffneter Stellung entlang A-A;
- Figur 1c: einen Schrägriss durch das Klemmsystem aus Figur 1a;
- Figur 1d: einen Schnitt durch das Klemmsystem aus Figur 1a in geschlossener Stellung entlang A-A;
- Figur 2a: einen Schnitt durch ein Klemmsystem gemäß einer weiteren bevorzugten Ausführungsform;
- Figur 2b: ein Schrägriss eines Klemmsystems mit gemäß Figur 2a;
- Figur 3: ein System gemäß einer weiteren bevorzugten Ausführungsform;
- Figur 4: ein Wechselbehälter in einem in eine Bauvorrichtung eingeführten Zustand;
- Figur 5: ein Wechselbehälter in einem unverriegeltem Zustand in der Bauvorrichtung;
- Figur 6: die Ansicht der Darstellung von Figur 5 von der Seite;
- Figur 7: eine bevorzugte Ausführung der Verriegelung des Wechselbehälters mit geöffnetem Linearaktor;
- Figur 8: die Wechselbehälterverriegelung von Figur 7 mit geschlossenem Linearaktor;
- Figur 9: einen weitere bevorzugte Ausführung des Klemmechanismus nach der Erfindung; und
- Figur 10: ein Wechselbehälter in einem unverriegelten und verriegelten Zustand in der Bauvorrichtung.

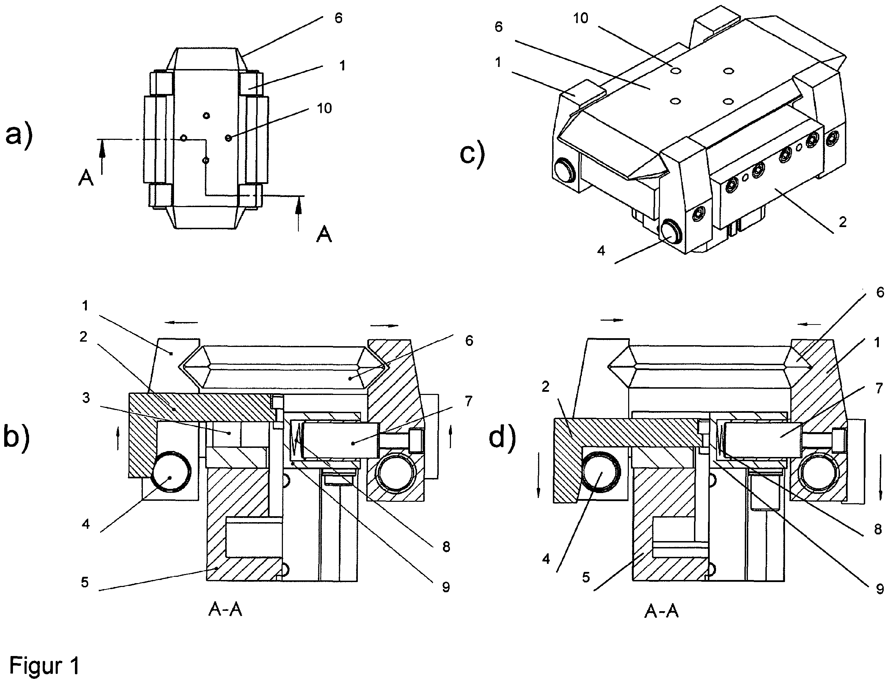

In einer bevorzugten Ausführungsform der Erfindung, wie sie beispielsweise in Figur 1 gezeigt ist, ist ein Teil eines Systems dargestellt. Es ist hier eine Möglichkeit dargestellt, wie in einer in der Bauvorrichtung eingeführten Bauplattformposition unterhalb der Bauplattform bauvorrichtungsseitig eine Klemmbackenspannvorrichtung vorgesehen ist, die mit einem Teilabschnitt der Bauplattform in Eingriff gebracht werden kann.

In dieser Figur ist die Bauplattform nicht gezeigt, sondern nur der Abschnitt, der an ihrer Unterseite angebracht ist. Die Bauplattform wäre gemäß dieser gezeigten Ausführungsform an den Bohrungen 10 anzubringen.

Die Bauplattform verfügt also über einen zentrisch angebrachten Prismenblock 6, der bei Einschub des Wechselbehälters in eine Bauvorrichtung von vier Klemmbacken 1 mit entsprechender prismatischer Aussparung, zunächst zentriert wird. Zum Klemmen der Klemmbacken muss dabei die Z-Achse, also die Achse zur Vertikalbeziehungsweise Höhenverstellung der Bauplattform, im Gegensatz zu den verbreiteten Vorrichtungen nach dem Stand der Technik nicht verfahren werden.

Jede Klemmbacke 1 wird in Greifrichtung über einen zylindrischen Bolzen 7 in einer Führungsplatte 9 geführt. Zwei parallele Klemmbacken 1 werden jeweils über eine zylindrische Verbindungswelle 4 verbunden.

Die Verbindungswelle 4 ist dabei in jeder Klemmbacke 1 drehbar gelagert. Zwischen den Klemmbacken 1 bewegt sich vertikal eine von Führungsbolzen 3 geführt die Schließkeilplatte 2 mit zwei parallelen Keilen.

Die Keile liegen so an den Verbindungswellen 4 an, dass sie beim Herunterfahren diese und damit auch die Klemmbacken 1 zusammenführen.

Die Schließkeilplatte 2 wird dazu von einem Pneumatikzylinder 5 angetrieben. Der Winkel der Keile ist so gewählt, dass er die Spannkraft des Pneumatikzylinders 5 vervielfacht.

Um ein Lösen der Fixierung bei einem Druckluftausfall zu verhindern, geht die Schräge des Keils vorzugsweise in eine vertikale Gerade über. In Anschlagstellung liegt der Keil mit seiner geraden Fläche an der Rundstange an, und verhindert damit ein Aufdrücken der Klemmbacken 1. Zum Öffnen muss erneut eine vertikale Kraft aufgebracht werden.

Für ein paralleles Öffnen der Klemmbacken 1 werden diese an ihrem Führungsbolzen 7 mit Rückstellfedern 8 nach außen gedrückt.

Zur besseren Einführung und Zentrierung in die Bauvorrichtung ist der Prismenblock 6 an den Stirnseiten angefast.

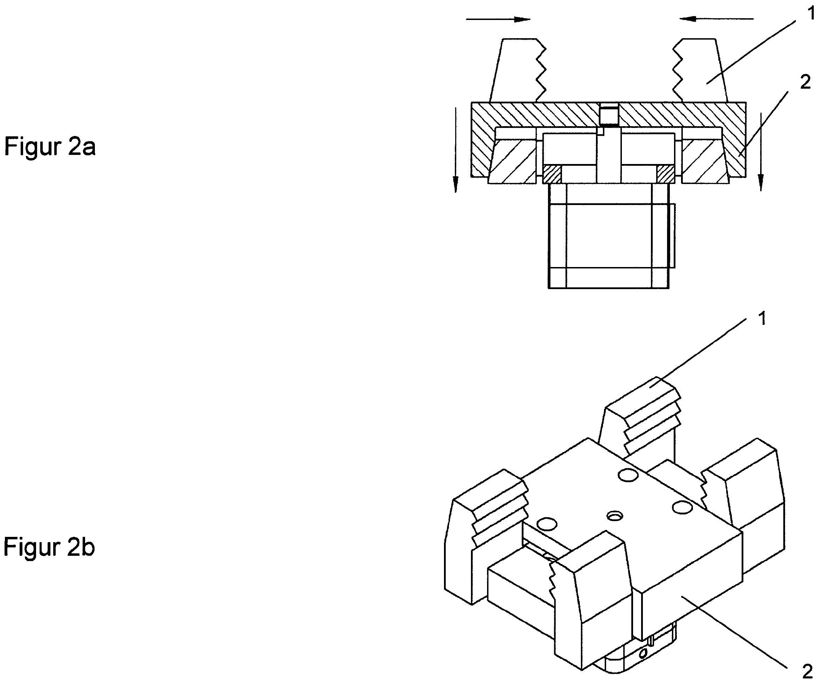

Eine weitere bevorzugte Ausführungsform der Erfindung ist in Figur 2 dargestellt. Wie man in dieser Darstellung sieht, ist es ebenso möglich anstatt eines Prismenblocks 6 beispielsweise ein quaderförmiger Block zum Angreifen an der Bauplattform verwendet wird. Eine Zentrierung des Quaderblocks kann über nahezu jede formschlüssige Kombination von Klemmbacke 1 und Klemmplatte erfolgen. So zeigen Figur 2a und 2b verzahnte Klemmbacken 1 für einen entsprechend verzahnten Klemmblock.

Zum Spannen der Klemmbacken 1 wird gemäß der hier in Figur 2 gezeigten Ausführungsform die Geometrie derart gewählt, dass der Keilwinkel der Schließkeilplatte 2 an einer parallelen schrägen Fläche 11 entlangläuft.

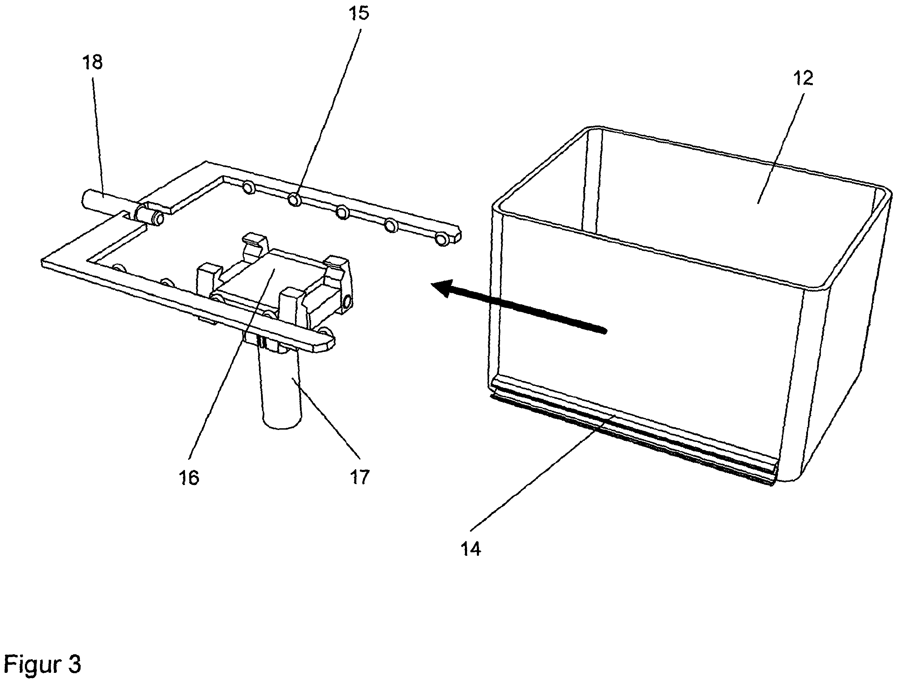

In der Figur 3 ist dargestellt, wie ein Wechselbehälter 12 in eine Bauvorrichtung eingeführt wird. Am Wechselbehälter sind seitlich zur Einschubrichtung 13 Profilschienen 14 vorgesehen, die zuerst mit der Rollenbahn mit profilierten Rollen 15 in Eingriff gebracht werden und so in die Bauvorrichtung eingefahren werden. Die Rollenbahn 15 ist wiederum, was nicht dargestellt ist, mit der Bauvorrichtung verbunden. Unterhalb der Rollenbahn 15 ist ein Klemmbackenspanner 16 sowie die sogenannte Z-Achse 17 vorgesehen.

In Einschubrichtung 13 gesehen vorne ist die Arrettierung 18 der Jobbox beziehungsweise Wechselbehälter 12 in Einschubrichtung 13 angebracht.

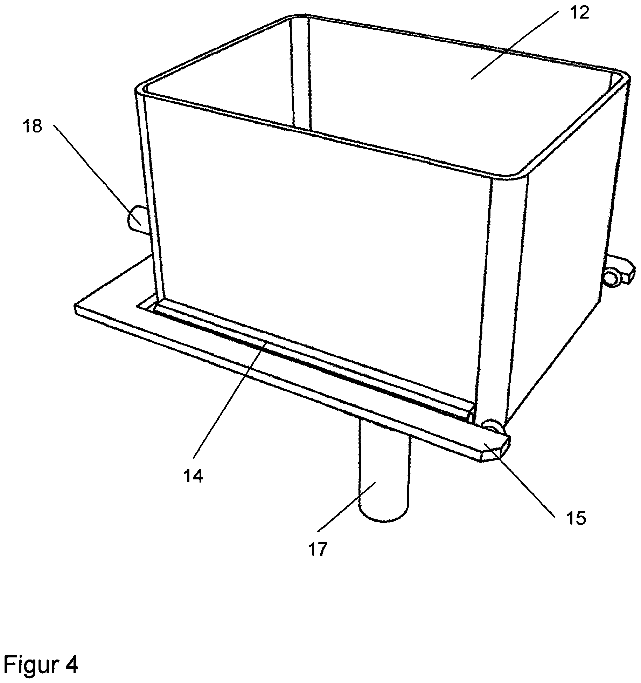

In Figur 4 ist der Wechselbehälter 12 in einer in der Bauvorrichtung eingefahrenen Position dargestellt.

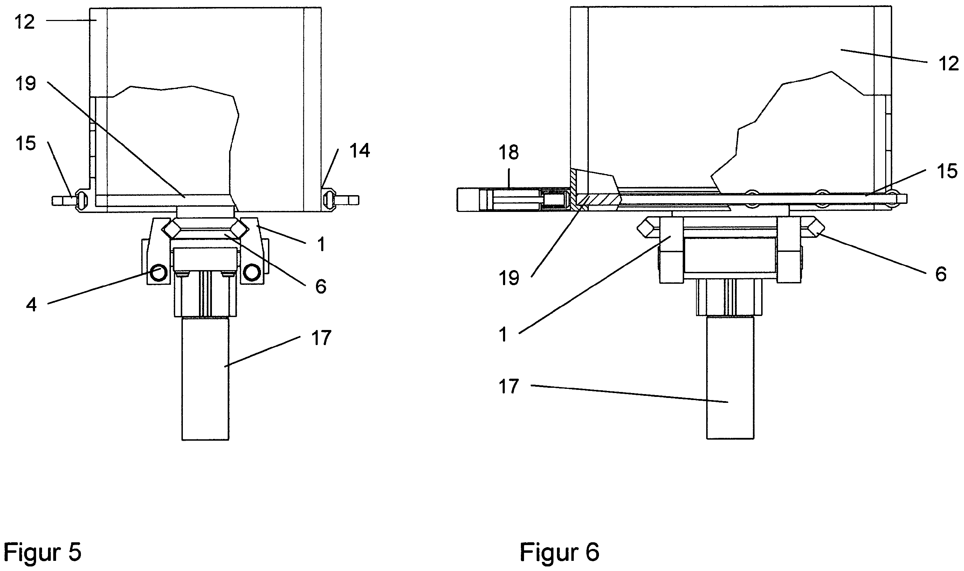

In Figur 5 und 6 ist jeweils ein eine Bauplattform 19 aufweisender Wechselbehälter 12 in einem unverriegelten Zustand in einer Bauvorrichtung dargestellt. Figur 6 zeigt dabei eine Ansicht der Darstellung der Figur 5 von der Seite ist.

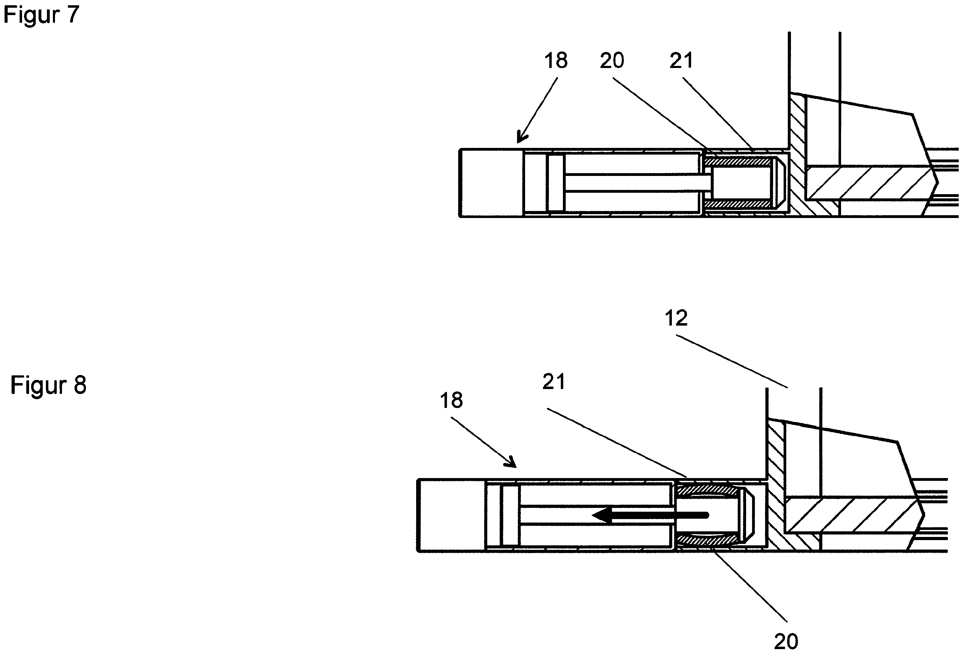

In der Figur 7 ist eine bevorzugte Ausführung der Jobboxverriegelung beziehungsweise -arrettierung 18 mit einem geöffnetem Linearaktor und in Figur 8 die Jobboxverriegelung von Figur 7 mit geschlossenem Linearaktor dargestellt.

Gemäß der gezeigten bevorzugten Ausführungsform wird zur Fixierung des Wechselbehälters 12 ähnlich einem Flaschenverschluss eine runde Hülse 20 aus flexiblen Material in eine Öffnung 21 der Wandung des Wechselbehälters 12 eingeführt und axial so zusammengedrückt, dass sie sich im Durchmesser weitet, damit eine kraftschlüssige Fixierung der Jobbox 12 in Einschubrichtung über ein anschwellendes Formteil 20 mit richtungsneutraler Schließbewegung erreicht wird.

Diese Klemmvorrichtung ist dabei vorzugsweise fest mit der Bauvorrichtung verbunden. Das Gegenstück dazu ist eine Bohrung an der Rückseite der Jobbox 12. Wird die Jobbox 12 in die Anlage eingeführt, schiebt sich die Bohrung 21 zentrisch über die Klemmvorrichtung. Beim Verriegeln spreizt sich die Hülse in die Bohrung 21 und fixiert so die Jobbox 12 in Einschubrichtung.

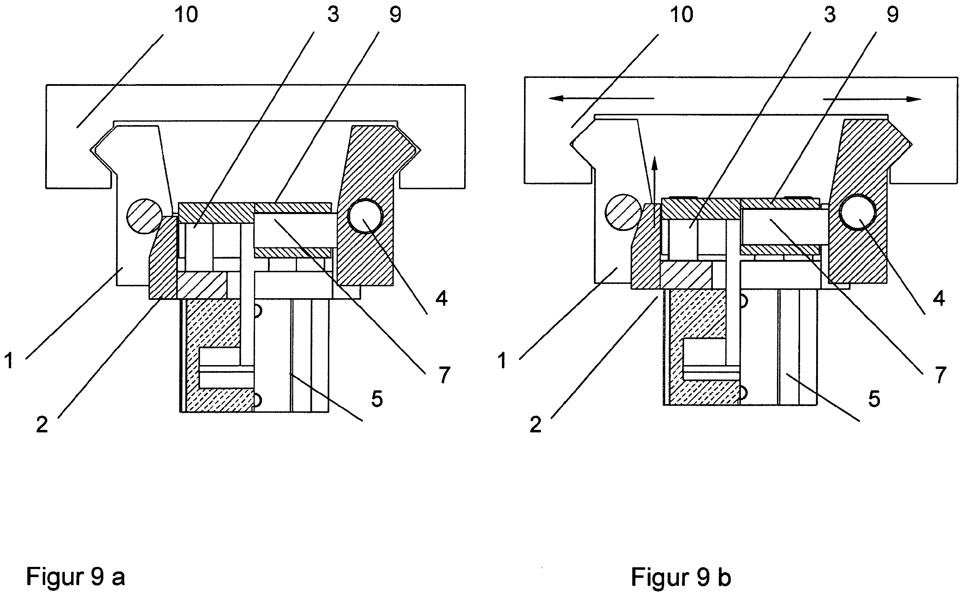

In Figur 9 ist eine weitere bevorzugte Ausführungsform der vorliegenden Erfindung gezeigt. Dabei zeigt Figur 9a den unverriegelten und Figur 9b den verriegelten Zustand.

Die Darstellung entspricht grob der Darstellung von Figur 1. Wie nun mit Bezug auf Figur 9 gezeigt ist, kann der bisher mit Bezug auf Figur 1 beschriebene Klemmmechanismus auch "kopfüber" gestaltet werden. Das heißt der Klemmkeil der Schließkeilplatte 2 fährt samt Druckluftzylinder von unten nach oben. Wie hier gezeigt ist, werden darüberhinaus gemäß der gezeigten bevorzugten Ausführungsform die Klemmbacken 1 von innen nach außen gedrückt. Die Bauplattform 19 ist dabei mit einer Aussparung derart versehen, so dass dieser Teil der Bauplattform 19 einen konkaven Abschnitt 22 ausbildet, in den die Klemmbacken 1 beziehungsweise hier auch Spreizbacken eingreifen.

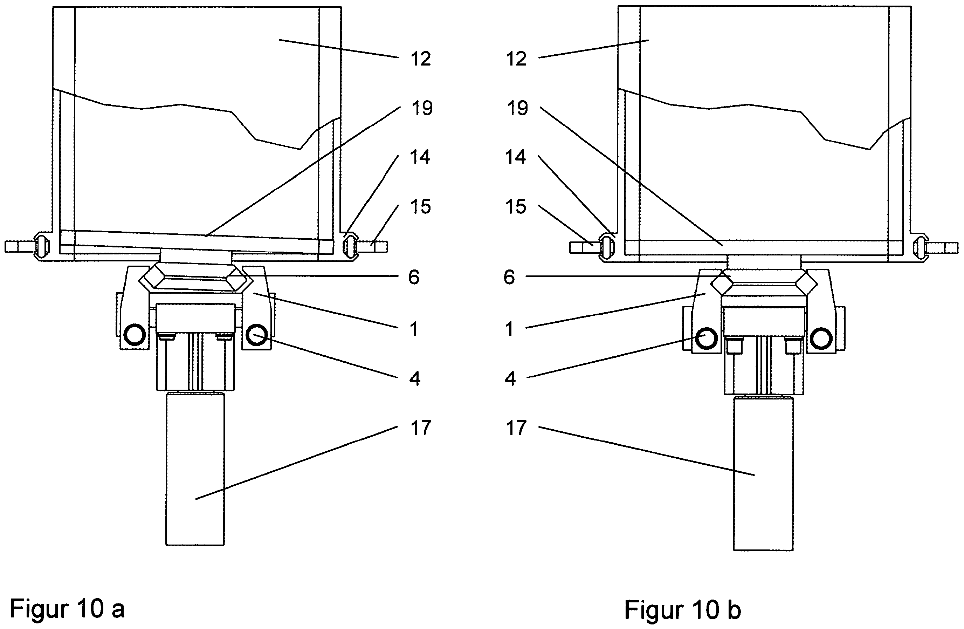

Figur 10 zeigt die Situation wenn eine Bauplattform 2 anfangs schräg in einem Wechselbehälter 12 liegt. Eine grobe Schrägstellung wird mit einem System nach der vorliegenden Erfindung bereits beim Einschieben des Wechselbehälters 12 ausgerichtet. Dazu weist der Prismenblock 6 entsprechend horizontale und vertikale Abschrägungen auf, die mit der Bauplattform 2beim Einführen dieser in die Bauvorrichtung in Eingriff kommen.

Die restliche Zentrierung übernehmen die profilierten Klemmbacken 1 beim Schließen des Klemmbackenspanners.

### Bezugszeichenliste

- 1: Klemmbacke
- 2: Schließkeilplatte
- 3: Führungbolzen der Keilplatte
- 4: Verbindungswelle
- 5: Pneumatikzylinder
- 6: Prismenblock
- 7: Führungsbolzen einer Klemmbacke
- 8: Rückstellfeder
- 9: Führungsplatte
- 10: Bohrung
- 11: Schräge Fläche
- 12: Wechselbehälter
- 13: Einschubrichtung
- 14: Profilschienen
- 15: Rollenbahn
- 16: Klemmbackenspanner
- 17: Z-Achse
- 18: Wechselbehälterarrettierung
- 19: Bauplattform
- 20: Hülse
- 21: Oeffnung
- 22: Außenkeil

## Patentansprüche

1. System zum Herstellen dreidimensionaler Modelle mittels Schichtauftragstechnik von fluidem Baumaterial auf eine Bauplattform (19) eines Wechselbehälters, wobei im wesentlichen horizontale Zu- und Abführbereiche zum Zu- und Abführen der Bauplattform in eine Bauvorrichtung vorgesehen sind und die Bauplattform in einem in die Bauvorrichtung eingeführten Zustand zumindest teilweise während eines Schichtauftragungsprozesses mit der Bauvorrichtung in Eingriff gebracht wird, und in einer in der Bauvorrichtung eingeführten Bauplattformposition unterhalb der Bauplattform bauvorrichtungsseitig eine Klemmbackenspannvorrichtung (16) mit horizontalen zustellbaren Klemmbacken (1) vorgesehen ist, die mit einem Teilabschnitt der Bauplattform in Eingriff gebracht werden kann, wobei die Bauplattform an dem von den Klemmbacken anzugreifenden Bereich eine den Klemmbacken entsprechende Geometrie aufweist und somit beim Klemmen zentriert wird.

2. System nach Anspruch 1, **dadurch gekennzeichnet, dass** das Zu- und Abführen der Bauplattform in eine Bauvorrichtung entlang eines Schienensystems erfolgt und Wechselbehälter und/oder zumindest in einer in die Bauvorrichtung eingeführten Position vertikal und quer zur Einschubrichtung lagedefiniert führt und gegebenenfalls sichert.

3. System nach Anspruch 2, **dadurch gekennzeichnet, dass** zumindest eine Wechselbehälterseitenwandung Schienen aufweist.

4. System nach Anspruch 2 oder 3, **dadurch gekennzeichnet, dass** zumindest die Bauvorrichtung Schienen aufweist.

5. System nach einem der vorhergehenden Ansprüche, **dadurch gekennzeichnet, dass** die Klemmbackenspannvorrichtung von unten in die Bauplattform eingreift.

6. System nach einem der vorhergehenden Ansprüche, **dadurch gekennzeichnet, dass** die Klemmbacken einen unterhalb der Bauplattform vorgesehenen Abschnitt umgreifen.

7. System nach einem der vorhergehenden Ansprüche, **dadurch gekennzeichnet, dass** mindestens ein, vorzugsweise zwei oder mehr Klemmbackenpaare vorgesehen sind.

8. System nach einem der vorhergehenden Ansprüche, **dadurch gekennzeichnet, dass** das oder die Klemmbackenpaare eine derartige Form aufweisen, dass die Bauplattform beim Einführen in die Bauvorrichtung vorzentriert wird.

9. System nach einem der vorhergehenden Ansprüche, **dadurch gekennzeichnet, dass** der Wechselbehälter in einer Einschubrichtung in der Bauvorrichtung fixiert ist.

10. System nach Anspruch 9, **dadurch gekennzeichnet, dass** eine Fixierung an einer in Einschubrichtung gesehen vorderen Wechselbehälterwandung derart vorgesehen ist, dass in der vorderen Wechselbehälterwandung eine Öffnung vorgesehen ist, in die ein an der Bauvorrichtung vorgesehener Aktor eingreift und in der Öffnung verspreizt.

11. System nach Anspruch 10, **dadurch gekennzeichnet, dass** der verspreizbare Aktor elastische Formteile, Keile, Keilsystem und/oder Spreizsysteme aufweist.

12. System nach Anspruch 7 bis 11, **dadurch gekennzeichnet, dass** parallel nebeneinander angeordnete Klemmbackenteile zumindest zweier Klemmbackenpaare eine im wesentlichen linearen Verbindungswelle aufweisen und ein Spannen der Klemmbacken über an die Verbindungswelle angreifende Keile erfolgt.

13. System nach Anspruch 12, **dadurch gekennzeichnet, dass** eine Geometrie der Keile so gewählt wird, dass in einer Klemmposition eine Selbsthemmung auftritt

## Claims

1. A system for manufacturing three-dimensional models by means of a layer application technique of fluid construction material onto a construction platform (19) of a job box, wherein substantially horizontal feeding and removal zones are provided for feeding the construction platform to a construction device and removing the construction platform from the construction device, and the construction platform, when introduced into the construction device, is brought into engagement with the construction device at least partially during the layer application process, and in a construction platform position introduced into the construction device, a clamping jaw device (16) with horizontal, adjustable clamping jaws (1) is provided on the side of the construction device, which clamping jaw device (16) can be brought into engagement with a section of the construction platform, wherein the region of the construction platform to be clamped by the clamping jaws has a geometry corresponding to the clamping jaws and is thus centered during clamping.

2. The system according to claim 1, **characterized in that** the feeding of the construction platform into a construction device and its removal from the construction device are performed along a rail system guiding and, if necessary, securing the position of job boxes and/or at least introduced into the construction platform in a defined position, which is vertical and transverse to the insertion direction.

3. The system according to claim 2, **characterized in that** at least one job box wall comprises rails.

4. The system according to claim 2 or 3, **characterized in that** at least the construction device comprises rails.

5. The system according to any one of the preceding claims, **characterized in that** the clamping jaw device engages the construction platform from below.

6. The system according to any one of the preceding claims, **characterized in that** the clamping jaws grasp a portion provided below the construction platform.

7. The system according to any one of the preceding claims, **characterized in that** at least one, preferably two or more pairs of clamping jaws are provided.

8. The system according to any one of the preceding claims, **characterized in that** the pair or pairs of clamping jaws has/have such a shape that the construction platform is precentered upon being introduced into the construction device.

9. The system according to any one of the preceding claims, **characterized in that** the job box is fixed in the construction device in an insertion direction.

10. The system according to claim 9, **characterized in that** a fixation is provided at a job box wall located in front, when viewed in the insertion direction, such that an opening is provided in the front job box wall into which an actuator provided on the construction device engages and spreads in the opening.

11. The system according to claim 10, **characterized in that** the spreadable actuator comprises elastic molded parts, wedges, a wedge system and/or spreading systems.

12. The system according to claims 7 to 11, **characterized in that** parallel adjacent clamping jaw parts of at least two pairs of clamping jaws comprise a substantially linear connecting shaft and clamping of the clamping jaws is effected by wedges acting on the connecting shaft.

13. The system according to claim 12, **characterized in that** a geometry of the wedges is selected such that self-locking occurs in a clamping position.

## Revendications

1. Système de production de modèles tridimensionnelles au moyen d'une technique d'application par couches de matériau de construction fluide sur une plateforme de construction (19) d'un conteneur interchangeable, des régions d'introduction et d'évacuation sensiblement horizontales étant prévues pour l'introduction de la plateforme de construction dans un dispositif de construction et l'évacuation de la plateforme de construction de ce dispositif de construction, et la plateforme de construction, dans un état introduit dans le dispositif de construction, venant en prise dans le dispositif de construction au moins partiellement pendant le procédé d'application par couches, et dans une position où la plateforme de construction est introduite dans le dispositif de construction, on prévoit du côté du dispositif de construction un dispositif à mâchoires de serrage (16) comportant des mâchoires de serrage (1) horizontales et réglables, ledit dispositif à mâchoires de serrage (16) pouvant venir en prise dans une section de la plateforme de construction, la région de la plateforme de construction à serrer par les mâchoires de serrage présentant une géométrie qui correspond aux mâchoires de serrage et étant ainsi centrée pendant le serrage.

2. Système selon la revendication 1, **caractérisé en ce que** l'introduction de la plateforme de construction dans un dispositif de construction et son évacuation dudit dispositif de construction sont exécutées selon un système de rails guidant et sécurisant, si nécessaire, les conteneurs interchangeables et/ou au moins dans une position définie d'introduction dans ladite plateforme de construction, cette position étant verticale et transversale par rapport à la direction d'insertion.

3. Système selon la revendication 2, **caractérisé en ce qu'**au moins une paroi du conteneur interchangeable comporte des rails.

4. Système selon la revendication 2 ou 3, **caractérisé en ce qu'**au moins le dispositif de construction comporte des rails.

5. Système selon l'une quelconque des revendications précédentes, **caractérisé en ce que** le dispositif à mâchoires de serrage vient en prise dans la plateforme de construction par dessous.

6. Système selon l'une quelconque des revendications précédentes, **caractérisé en ce que** les mâchoires de serrage saisissent une section prévue au-desssous de la plateforme de construction.

7. Système selon l'une quelconque des revendications précédentes, **caractérisé en ce que** l'on prévoit au moins une, de préférence deux ou plus de deux paires de mâchoires de serrage.

8. Système selon l'une quelconque des revendications précédentes, **caractérisé en ce que** la paire ou les paires de mâchoires de serrage présente(nt) une forme telle que la plateforme de construction soit pré-centrée lors de son introduction dans le dispositif de construction.

9. Système selon l'une quelconque des revendications précédentes, **caractérisé en ce que** le conteneur interchangeable est fixé dans le dispositif de construction dans une direction d'insertion.

10. Système selon la revendication 9, **caractérisé en ce que** l'on prévoit 'une fixation à une paroi avant du conteneur interchangeable, vue en direction d'insertion, de sorte qu'une ouverture soit réalisée dans la paroi avant du conteneur interchangeable, dans laquelle ouverture un actionneur, prévu sur le dispositif de construction, vient en prise tout en s'écartant dans l'ouverture.

11. Système selon la revendication 10, **caractérisé en ce que** l'actionneur écartable comporte des pièces moulées élastiques, des cales, un système de cales et/ou des systèmes d'écartement.

12. Système selon les revendications 7 à 11, **caractérisé en ce que** des parties parallèles et adjacentes des mâchoires de serrage d'au moins deux paires de mâchoires de serrage comportent un arbre de liaison sensiblement linéaire et le serrage des mâchoires de serrage est effectué par des cales agissant sur l'arbre de liaison.

13. Système selon la revendication 12, **caractérisé en ce qu'**une géométrie des cales est choisie de manière à produire un auto-blocage dans une position de serrage.
